(19) Europäisches Patentamt / European Patent Office / Office européen des brevets

(11) **EP 1 756 017 B1**

(12) **EUROPEAN PATENT SPECIFICATION**

(45) Date of publication and mention of the grant of the patent:
**12.09.2012 Bulletin 2012/37**

(51) Int Cl.:
***C03B 17/06*** (2006.01)

(21) Application number: **05754674.9**

(86) International application number:
**PCT/US2005/019158**

(22) Date of filing: **31.05.2005**

(87) International publication number:
**WO 2005/121035 (22.12.2005 Gazette 2005/51)**

(54) **ISOPIPE MASS DISTRIBUTION FOR FORMING GLASS SUBSTRATES**

ISOPIPE-MASSENVERTEILUNG ZUR FERTIGUNG VON GLASSUBSTRATEN

DISTRIBUTION HOMOGENE EN MASSE POUR FORMER DES SUBSTRATS DE VERRE

(84) Designated Contracting States:
**DE FR**

(30) Priority: **02.06.2004 US 859245**

(43) Date of publication of application:
**28.02.2007 Bulletin 2007/09**

(73) Proprietor: **Corning Incorporated
Corning NY 14831 (US)**

(72) Inventors:
• **ADAMOWICZ, John A
Corning, New York 14830 (US)**
• **BORATAV, Olus N
Ithaca, New York 14850 (US)**
• **RHOADS, Randy L
Horseheads, New York 14845 (US)**
• **EL KAHLOUT, Ahdi
Danville, KY 40422 (US)**
• **MARKHAM, Shawn R
Harrodsburg, KY 40330 (US)**

(74) Representative: **Oldroyd, Richard Duncan et al
Elkington and Fife LLP
Prospect House
8 Pembroke Road
Sevenoaks, Kent TN13 1XR (GB)**

(56) References cited:
US-A- 3 338 696    US-A- 3 537 834
US-A- 3 589 887    US-A1- 2001 039 814
US-A1- 2003 029 199    US-A1- 2003 121 287

• **PATENT ABSTRACTS OF JAPAN vol. 1997, no. 08, 29 August 1997 (1997-08-29) -& JP 09 110443 A (NIPPON ELECTRIC GLASS CO LTD), 28 April 1997 (1997-04-28)**

**Description**

**BACKGROUND OF THE INVENTION**

Field of the Invention

The present invention relates to a method for producing uniformly thick glass substrates using a glass manufacturing system that implements a fusion process.

Description of Related Art

Manufacturers of glass substrates (e.g., LCD glass substrates) that can be used in devices like flat panel displays are constantly trying to enhance the glass manufacturing process/system to produce uniformly thick glass substrates.

US-A-3 338 696 describes an apparatus for producing a glass substrate in which molten glass is delivered to a forming apparatus that has a body with an inlet that receives the molten glass which flows into a trough formed in the body and then overflows two top surfaces of the trough and runs down two sides of the body before fusing together where the two sides come together to form a glass sheet.

US-A-2001039814 describes an apparatus of the same type with design features that can be used alone or in combination to facilitate faster, more uniform flow of glass through the apparatus and allows the thickness of the sheet to be adjusted.

US-A-2003029199 describes further modifications to such an apparatus to redistribute the flow of molten glass to counteract degradation of the sheet forming apparatus during manufacturing, to minimise the effect of thermal creep on the glass flow characteristics of the forming trough, to reduce the influence of surface tension and body forces, to create forming stresses during solidification which ensure that the drawn glass sheet is inherently flat and to minimise air leakage in the apparatus.

One way to enhance the glass manufacturing process/system in order to produce such glass substrates is the subject of the present invention.

**BRIEF DESCRIPTION OF THE INVENTION**

The present invention provides a method for producing a glass substrate, said method comprising the steps of:

melting batch materials to form molten glass;

delivering the molten glass to a forming apparatus that has a body with an inlet that receives the molten glass which flows into a trough formed in the body and then overflows two top surfaces of the trough and runs down two sides of the body before fusing together where the two sides come together to form a glass sheet, and drawing the glass sheet using a pull roll assembly to produce the glass substrate, characterized in that delivery of the molten glass that flows over a predetermined length of both end sections of the trough is managed in order to help avoid temporal variations in the glass mass, distribution of the glass mass and thermal energy from the glass mass. In particular, delivery is managed so as to ensure that more than 7.98 kg/hour (17.6 lbs/hr) and preferably more than 9.07 kg/hour (20.0 lbs/hour) of molten glass flows over the first and last 10.16 cm (4 inches) of the two top surfaces at both end sections of the trough and that more than 26.13 kg/hou (57.6 lbs/hour) and preferably more than 29.48 kg/hour (65.0 lbs/hr) of molten glass flows over the first and last 22.86 cm (9 inches) of the two top surfaces at both end sections of the trough.

**BRIEF DESCRIPTION OF THE DRAWINGS**

A more complete understanding of the present invention may be obtained by reference to the following detailed description when taken in conjunction with the accompanying drawings wherein:

FIGURE 1 is a block diagram illustrating an exemplary glass manufacturing system that can be used to produce a dimensionally stable glass substrate in accordance with the present invention;

FIGURES 2A-2B are perspective views of two exemplary forming apparatuses that can be used in the glass manufacturing system shown in FIGURE 1;

FIGURE 3 is a flowchart illustrating the basic steps of a preferred method for producing a dimensionally stable glass substrate using the glass manufacturing system shown in FIGURE 1 and anyone of the forming apparatuses shown in FIGURES 2A-2B in accordance with the present invention;

FIGURE 4 is a graph illustrating details about the mass distribution of molten glass over the entire length of the forming apparatus shown in FIGURE 2B in accordance with the present invention; and

FIGURE 5 is a graph illustrating details about the mass distribution of molten glass on two end sections of exemplary forming apparatuses similar to the one shown in FIGURE 2B in accordance with the present invention.

## DETAILED DESCRIPTION OF THE DRAWINGS

Corning Inc. has developed a process known as the fusion process (e.g., downdraw process) that is used to form high quality thin glass substrates (e.g., LCD glass substrates) which can be used in a variety of devices like flat panel displays. The fusion process is the preferred technique for producing glass substrates used in flat panel displays because this process produces glass substrates whose surfaces have superior flatness and smoothness when compared to glass substrates produced by other methods. The fusion process is described in U.S. Patent Nos. 3,338,696 and 3,682,609.

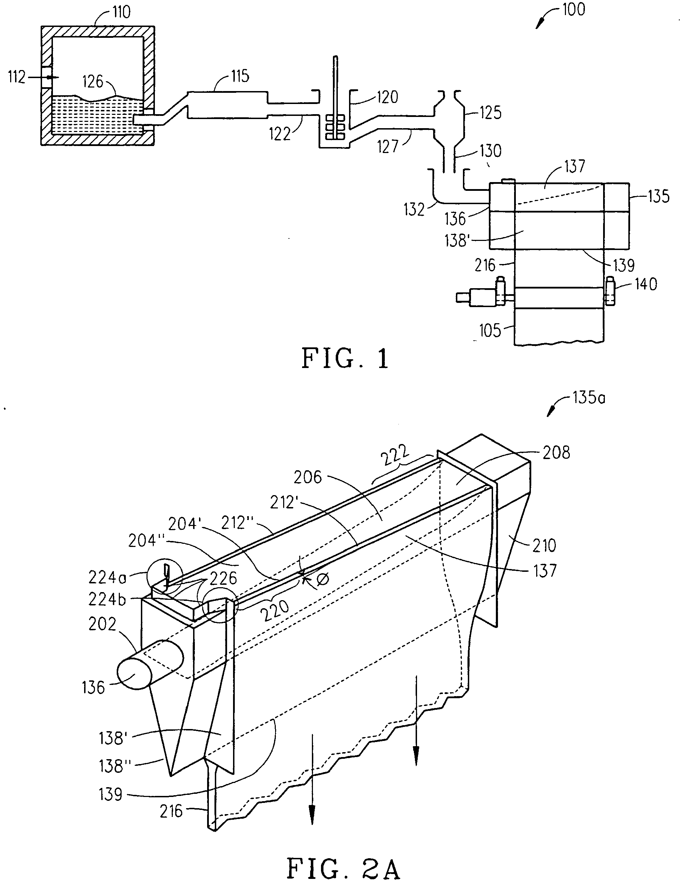

Referring to FIGURE 1, there is a diagram of an exemplary glass manufacturing system 100 that can use the fusion process to make a glass substrate 105. As shown in FIGURE 1, the glass manufacturing system 100 includes a melting vessel 110, a fining vessel 115, a mixing vessel 120 (e.g., stir chamber 120), a delivery vessel 125 (e.g., bowl 125), a forming apparatus 135 (e.g., isopipe 135) and a pull roll assembly 140 (e.g., draw machine 140). The melting vessel 110 is where the glass batch materials are introduced as shown by arrow 112 and melted to form molten glass 126. The fining vessel 115 (e.g., finer tube 115) has a high temperature processing area that receives the molten glass 126 (not shown at this point) from the melting vessel 110 and in which bubbles are removed from the molten glass 126. The fining vessel 115 is connected to the mixing vessel 120 (e.g., stir chamber 120) by a finer to stir chamber connecting tube 122. And, the mixing vessel 120 is connected to the delivery vessel 125 by a stir chamber to bowl connecting tube 127. The delivery vessel 125 delivers the molten glass 126 through a downcomer 130 to an inlet 132 and into the forming apparatus 135 (e.g., isopipe 135). The forming apparatus 135 includes an inlet 136 that receives the molten glass 126 which flows into a trough 137 and then overflows and runs down two sides 138' and 138" before fusing together at what is known as a root 139 (see FIGURES 2A-2C). The root 139 is where the two sides 138' and 138" come together and where the two overflow walls of molten glass 126 rejoin (e.g., refuse) before being drawn downward between two rolls in the pull roll assembly 140 to form the glass substrate 105. A detailed discussion on how the fusion process can be enhanced to enable the glass manufacturing system 100 to produce a uniformly thick glass substrate 105 is provided below after a brief description about two exemplary configurations of the forming apparatus 135.

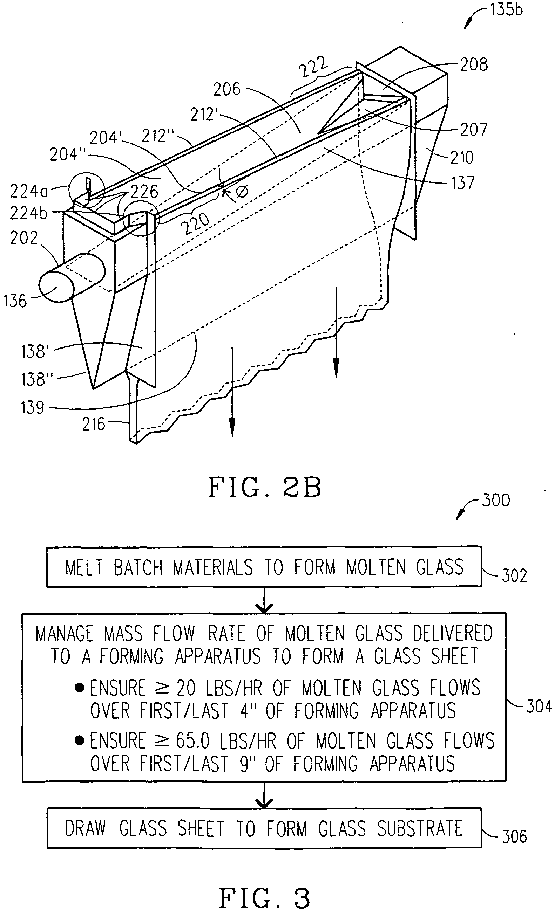

Referring to FIGURES 2A-2B, there are shown perspective views of two exemplary forming apparatuses 135a and 135b that can be used in the glass manufacturing system 100. Each forming apparatus 135a and 135b includes a feed pipe 202 that provides molten glass 126 through the inlet 136 to the trough 137. The trough 137 is bounded by interior side-walls 204' and 204" that are shown to have a substantially perpendicular relationship but could have any type of relationship to a bottom surface 206. There can be several configurations of the bottom surface 206 as shown in FIGURES 2A-2B. For instance, the forming apparatus 135a can have a bottom surface 206 that has a sharp decreasing height contour near the end 208 farthest from the inlet 136 to the trough 137 (see FIGURE 2A). Or, the forming apparatus 135b can have a bottom surface 206 which has located thereon an embedded object 207 near the end 208 farthest from the inlet 136 to the trough 137 (see FIGURE 2B). The forming apparatus 135b with the embedded object 207 is preferred since it can be difficult to size and manufacture the contoured bottom surface 206 in forming apparatus 135a.

The forming apparatuses 135a and 135b both have a cuneiform/wedge shaped body 210 with oppositely disposed converging side-walls 138' and 138". The trough 137 having the bottom surface 206 and possibly the embedded object 207 (embedded plow 207) is longitudinally located on the upper surface of the wedge-shaped body 210. The bottom surface 206 and embedded object 207 (if used) both have mathematically described patterns that become shallow at end 208 which is the end the farthest from the inlet 202. As shown in FIGURES 2A-2B, the height between the bottom surface 206 and the top surfaces 212' and 212" of the trough 137 decreases as one moves away from the inlet 136 towards end 208. However, it should be appreciated that the height can vary in any manner between the bottom surface 206 and top surfaces 212' and 212". It should also be appreciated that the body 210 may be pivotally adjusted by a device such as an adjustable roller, wedge, cam or other device (not shown) to provide a desired tilt angle shown as $\phi$ which is the angular variation from the horizontal of the parallel top surfaces 212' and 212".

In operation, molten glass 126 enters the trough 137 through the feed pipe 202 and inlet 136. Then the molten glass 126 wells over the parallel top surfaces 212' and 212" of the trough 137, divides, and flows down each side of the oppositely disposed converging sidewalls 138' and 138" of the wedge-shaped body 210. At the bottom of the wedge portion or the root 139, the divided molten glass 126 rejoins to form a glass sheet 216 that has very flat and smooth surfaces. The high surface quality of the glass sheet 216 results from a free surface of molten glass 126 that divides and flows down the oppositely disposed converging side-walls 138' and 138" and forming the exterior surfaces of the glass sheet 216 without coming into contact with the outside of the forming apparatus 135a and 135b. It should be appreciated that the glass sheet 216 becomes what is often referred to in industry as the glass substrate 105 after it is drawn by the pull roll assembly 140 (see FIGURE 1).

As described above, the glass substrates 105 made in the glass manufacturing system 100 that uses the fusion process need to have a uniform thickness so they can be used in devices like flat panel displays. To help ensure that this happens the inventors have conducted studies and determined a way to enhance the fusion process so as to produce such glass substrates 105. In particular, the inventors have found that by managing the mass distribution of molten glass 126 which flows over the forming apparatus 135a or 135b one can have a direct impact on the quality/attributes of the glass substrate 105. As such, the subject of the present invention relates to the management of the mass flow rate of molten glass 126 that flows over the forming apparatus 135a or 135b.

Referring to FIGURE 3, there is a flowchart illustrating the basic steps of a preferred method 300 for producing a glass substrate 105 using the glass manufacturing system 100 and the fusion process in accordance with the present invention. Beginning at step 302, the glass manufacturing system 100 and in particular the melting vessel 110, the fining vessel 115, the mixing vessel 120 and the delivery vessel 125 are used to melt batch materials and form molten glass 126 (see FIGURE 1). It should be appreciated that the configuration of the glass manufacturing system 100 shown in FIGURE 1 is exemplary and that other glass manufacturing systems can be used to melt batch materials to form molten glass 126 in accordance with the present invention.

At step 304, the molten glass 126 is delivered to a forming apparatus 135 (see FIGURES 1 and 2A-2C). Again the forming apparatus 135 has a body 210 with an inlet 136 that receives the molten glass 126 which flows into a trough 137 formed in the body 210 and then overflows two top surfaces 212' and 212" of the trough 137 and runs down two sides 138' and 138" of the body 210 before fusing together at the root 139 to form a glass sheet 216. In accordance with the present invention, the delivering step 304 includes managing the mass flow rate of molten glass 126 that flows over a predetermined length of two end sections 220 and 222 of the trough 137 to avoid temporal variations in the glass mass, distribution of the glass mass and thermal energy from the glass mass. In particular, the delivering and managing step 304 includes ensuring more than 7.98 kg/hour (17.6 lbs/hr) and preferably more than 9.07 kg/hour (20.0 lbs/hour) of molten glass 126 flows over the first and last 10.16 cm (4 inches) of the two top surfaces at both end sections 220 and 222 of the trough 137.

The delivering and managing step 304 also includes ensuring more than 26.13 kg/hour (57.6 lbs/hour) and preferably more than 29.48 kg/hour (65.0 lbs/hr) of molten glass 126 flows over the first and last 22.86 cm (9 inches) of the two top surfaces at both end sections 220 and 222 of the trough 137. Lastly at step 306, the glass sheet 216 which is formed at the root 139 of the forming apparatus 135 is drawn downward between two rolls in the pull roll assembly 140 to form the glass substrate 105.

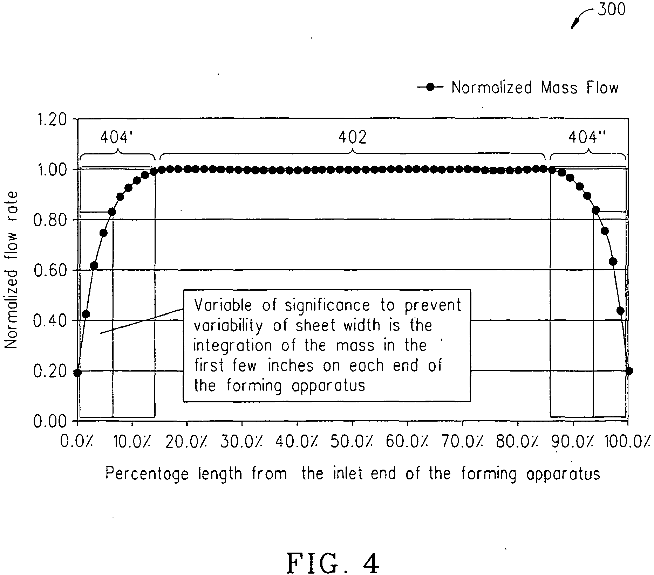

Referring to FIGURES 4-5, there are two graphs illustrating details about the mass distribution of molten glass 126 over all or a portion of the trough 137 in exemplary forming apparatuses that are configured like forming apparatus 135b in accordance with the delivering and managing step 304 of the present invention. As can be seen in FIGURE 4, the mass distribution of molten glass 126 over the top surfaces 212' and 212" of the forming apparatus 135 has a predefined profile (e.g., a predefined flat profile as shown) in the center of the trough 137 and drops off precipitously to zero at the extreme ends of the trough 137. This type of mass distribution of molten glass 126 usually results in a glass substrate 105 that has a "thick" portion on each of its ends referred to as a bead. The "thick" portions are trimmed off the glass substrate 105.

It is known that an efficient fusion process results in a glass substrate 105 that has a large area with a constant thickness. And, it has been determined that the uniform thickness portion of the glass substrate 105 has attributes that are dependent on the temporal variation in the mass flow of molten glass 126 and hence the thermal energy from the beads. It has also been determined that in order to manufacture a glass substrate 105 which has tight attributes for stress, warp, thickness, and sheet sag then there needs to be a stable continuous bead mass on the glass substrate 105. A fusion process which is not stable in bead mass is wrought with trouble meeting consistent attributes in the glass substrate 105. For example, if the forming apparatus 135 is designed with too little flow of molten glass 126 on the end sections 220 and 222 of the trough 137 then the fusion process will suffer from instability because of variations in the temporal mass of molten glass 126 delivered from the end sections 220 and 222 of the trough 137. The present invention relates to the minimum mass flow of molten glass 126 that is needed to flow over the area in both end sections 220 and 222 of the trough 137 in order to maintain a stable fusion process and to produce uniformly thick glass substrates 105.

As shown in FIGURE 4, the length of the forming apparatus 135 is depicted as a percentage of length. As can be seen, the absolute length of the change in the mass flow rate of molten glass 126 from the predefined profile in the center region 402 of the graph 400 to zero at the extreme ends of the forming apparatus 135 occurs over a fixed distance despite the length of the forming apparatus 135. This distance is 9 inches and is shown in the end regions 404' and 404" of the graph 400. For the fusion process to be stable the mass flow rate of molten glass in the first and last 10.16 cm (4 inches) of the forming apparatus 135 should exceed 7.98 kg/hour (17.6 lbs/hr) and preferably more than 9.07 kg/hour (20.0 lbs/hour). And, the mass flow rate of molten glass in the first and last 22.86 cm (9 inches) of the forming apparatus 135 should exceed 26.13 kg/hour (57.6 lbs/hour) and preferably more than 29.48 kg/hour (65.0 lbs/hour). The physical flow of molten glass 126 into the trough 137 can be controlled in several ways including (for example): (1) by selecting a desired geometry of the inlet 136 in the trough 137; and (2) by adjusting the viscosity of the molten glass 126 delivered to the forming apparatus 135.

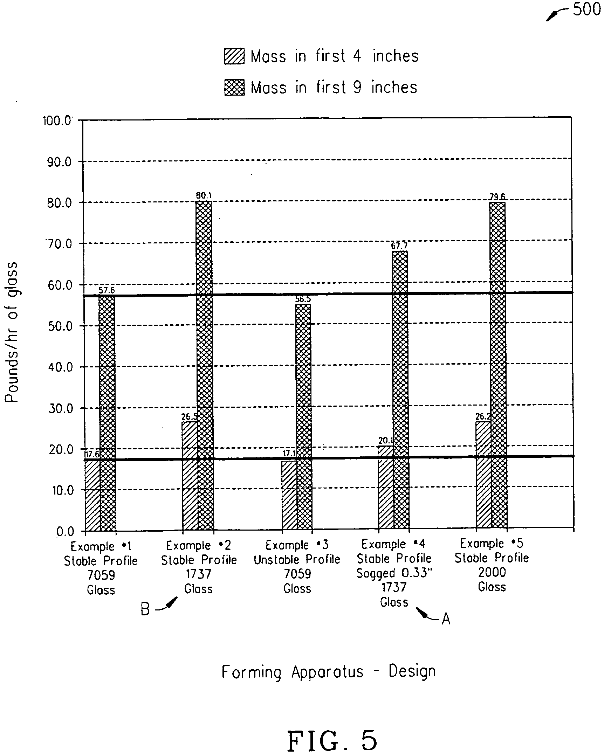

As shown in FIGURE 5, the graph 500 illustrate details about the mass distribution of molten glass in the first 4 inches and the first 9 inches on two ends of several forming apparatuses 135 in accordance with the present invention. The fusion processes which have experienced sheet width instability are those which have mass flow rates of molten glass 126 that are less than 7.98 kg/hour (17.6 lbs/hr) in the first and last 10.16 kg/hour (4 inches) and less than 26.13 kg/hour (57.6 lbs/hr) in the first and last 22.86 cm (9 inches) of the forming apparatus 135. These limits on the mass distribution of molten glass 126 that overflows the ends of the forming apparatus 135 are indicated by the solid horizontal lines in graph 500 shown in FIGURE 5. The inventors have found that as the flow of molten glass 126 over the end sections 220 and 222 of the forming apparatus 135 drops below 9.12 kg/hour (20.1 lbs/hr) in the first 10.16 cm (4 inches) then the risk of sheet instability increases dramatically. And, as the flow of molten glass 126 over the end sections 220 and 222 of the forming apparatus 135 drops below 6.80 kg/hour (15 lbs/hr) in the first 10.16 cm (4 inches), instability is certain and continues to increase in magnitude with lower flow conditions.

It should be appreciated that the forming apparatus 135 is generally long compared to it's cross section and as such the structure can sag due to material creep over time as a result of the load and high temperature associated with the sheet forming process. A sagging forming apparatus 135 influences the resulting mass flow rate of molten glass 126 in the first and last 10.16 cm (4 inches) as well as the first and last 22.86 cm (9 inches). To illustrate this influence, reference is made to graph 500 where it can be seen how the mass flow rate of molten glass 126 differs between the sagged forming apparatus 135 (labeled as "A") to the unsagged forming apparatus 135 (labeled as "B"). As such, in designing the forming apparatus 135 one needs to consider and allow for this inevitable process change. In particular, in designing the forming apparatus 135 one needs to design the forming apparatus 135 such that at the end of it's life the flow of molten glass 126 over the first and last 10.16 cm (4 inches) is not less than 9.07 kg/hour (20 lbs/hr) and the flow of molten glass 126 over the first and last 22.86 cm (9 inches) is not less than 29.48 kg/hour (65 lbs/hr). It should be noted that the affect of aging on the geometry of the forming apparatus 135 is a function of the geometry of the forming apparatus 135, the material properties, and the supporting system and can be discovered using known analytical methods. For instance, the influence the sagged geometry will have on the flow of molten glass 126 can be derived experimentally, using CFD code, or analytically.

Details about the compositions of different glasses manufactured by Corning, Inc. which are listed in FIGURE 5 are shown below in TABLE #1.

TABLE #1

| Corning Glass Family | 7059 | 1737 | 2000 |
|---|---|---|---|
| Composition (wt%) | | | |
| $SiO_2$ | 48.77 | 57.66 | 63.3 |
| $Al_2O_3$ | 10.97 | 16.56 | 16.34 |
| $B_2O_3$ | 14.31 | 8.43 | 10.33 |
| MgO | - | 0.74 | 0.12 |
| CaO | - | 4.16 | 7.756 |
| SrO | 0.42 | 1.9 | 0.8023 |
| BaO | 24.33 | 9.38 | 0.07 |
| $AS_2O_3$ | 1.13 | 1.1 | 0.901 |
| $Sb_2O_3$ | - | - | - |
| $SnO_2$ | - | - | 0.04 |

Experience has shown that dimensionally stable glass substrates 105 can be produced from the different glass compositions listed in TABLE #1 in accordance with present invention. In addition to the aforementioned glass compositions listed in FIGURES 5A-5B and TABLE #1, it should be understood that other type of glass compositions can be used in the enhanced fusion process of the present invention to make dimensionally stable glass substrates 105. For instance, these glass compositions can include various compositions manufactured and sold by companies like Nippon Electric Glass Co., NHTechno and Samsung Corning Precision Glass Co. (for example). Details about some of these glass compositions are provided below in TABLE #2.

TABLE #2

| Various Glasses | NEG (OA2) | NEG (OA10) | NH Techno (NA35) |
|---|---|---|---|
| Composition (wt%) | | | |
| $SiO_2$ | 55.8 | 59.1 | 58.7 |
| $Al_2O_3$ | 12.6 | 15.5 | 15.0 |
| $B_2O_3$ | 6.89 | 9.54 | 10.4 |
| MgO | - | 0.013 | 0.56 |
| CaO | 5.86 | 5.36 | 4.72 |
| SrO | 3.65 | 6.16 | 3.14 |
| BaO | 14.2 | 2.66 | 6.23 |
| $As_2O_3$ | 0.57 | 0.56 | 0.91 |
| $Sb_2O_3$ | - | 0.34 | - |
| Cl | - | - | - |
| F | - | - | - |
| $ZrO_2$ | 0.57 | 0.15 | 0.066 |
| ZnO | 0.43 | 0.45 | - |

It should be appreciated that even though the glasses listed in TABLES #1 and 2 may have different densities it is the mass flow rate of molten glass that is important to the present invention. As such, if a glass of a different density is melted then the volumetric flow of the molten glass into the forming apparatus 135 may have to be adjusted to meet the mass target associated with that particular forming apparatus 135.

As described above with respect to FIGURES 2A-2B, the forming apparatus 135 enables the flowing molten glass 126 to overflow the trough 137 and flow down two sides 138' and 138" and as it does the molten glass 126 gets thinner in the region near the root 139 due to the force of gravity and the force of the pulling roll assembly 140 which draws the molten glass 126 to produce the desired glass substrate 105. To enable a mass flow rate of molten glass 126 which is greater than 9.07 kg/hour (20.0 lbs/hr) in the first/last 10.16.cm (4 inches) of the trough 137 and greater than 26.13 kg/hour (57.6 lbs/hr) in the first/last 22.86 cm (9 inches) of the trough 137 one needs to properly size the trough 137. To properly size the trough 127 of the forming apparatus 135 one could use physical modeling, mathematical modeling or a flow rate expression which is generally described in U.S. Patent No. 3,338,696 as:

$$ Q = \frac{\rho\, g \tan\phi}{3\mu}\, w^4 \alpha^3 \left[ 1 - \frac{3}{8} \sum_{n=0}^{\infty} \frac{\alpha}{\beta_n^5}\ \tanh(\beta_n/\alpha) \right] $$

where

Q = the flow rate at any cross section of the trough 137.
w = the channel width of the trough 137.
$\alpha$ = the aspect ratio--height over width of the trough 137.
$\beta_n$ = a variable given by $(2n + 1)/\pi/4$.
$\rho$ = density of the molten glass 126.
$\mu$ = viscosity of the molten glass 126.
$\phi$ = angle between a horizontal plane and the parallel upper surfaces on the trough 137.
g = gravity 980 cm/sec$^2$.

This equation is often associated with the forming apparatuses 135a shown in FIGURE 2A. However, the forming apparatus 135b which has an embedded object 207 located in the trough 137 as shown in FIGURE 2B can also be sized to have the same flow rates as forming apparatus 135a. For a detailed discussion on how the forming apparatus 135b can be sized to have the same mass flow rate as forming apparatus 135a reference is made to a patent application by Randy L. Rhoads et al. entitled "Glass Sheet Forming Apparatus" (US-A-2005/0268658). It should also be appreciated that the trough 137 can also have yokes 224a and 224b and free surfaces 226 near the inlet 202 all of which are sized in the same manner as the bottom surface 206 is sized in order to enable a desired mass distribution of molten glass 126 to overflow the trough 137 and form a uniformly thick glass sheet 105 (see FIGURES 2A and 2B).

From the foregoing, it can be readily appreciated by those skilled in the art that an important factor in performance of a fusion process is the mass flow rate at the end sections of the forming apparatus. Too little flow and the drawn glass substrate can exhibit instability in the quality of the glass substrate leading to attribute performance issues resulting in product loss. What is taught herein is that in order to be successful in using the fusion process to produce dimensionally stable glass substrates the flow on the end sections of the forming apparatus needs to exceed certain values. Namely, the mass flow rate of molten glass 126 needs to be greater than 9.07 kg/hour (20.0 lbs/hr) in the first/last 10.16 cm (4 inches) of the forming apparatus and greater than 26.13 kg/hour (57.6 lbs/hr) in the first/last 22.86 cm (9 inches) of the forming apparatus 135.

Following are some additional features and advantages associated with the present invention:

- The mass distribution criteria described herein is used to establish a stable manufacturing process capable of delivering demanding dimensionally stable substrates that can be used in the LCD market.

- It should be appreciated that the glass manufacturing system 100 is exemplary and that other types and configurations of glass manufacturing systems can be used in accordance with the present invention so long as the proper mass flow of molten glass over the edges of the forming apparatus is maintained in accordance with the present invention.

- It should be appreciated that other configurations and different types of forming apparatuses besides those shown in FIGURES 2A-2B can be used to make glass substrates in accordance with the present invention. For example, it should be understood that in addition to the embedded object 207 located in forming apparatus 135b shown in FIGURE 2B that has the shape of a plow with multiple intersecting triangular surfaces, the embedded object 207 can have a wide range of shapes and configurations including, for instance, a diverging rectangular cross-sectional shaped embedded object, a semi-elliptical/circular cross-sectional shaped embedded object, a triangular cross-sectional shaped embedded object and a trapezoidal cross-sectional shaped embedded object. In fact, the embedded object 207 can be any type of object that has a diverging cross-sectional shape.

- The forming apparatus is preferably made from a zircon refractory material that has an appropriate creep resistance property so it does not sag or sags very little when forming the glass sheet.

- The preferred glass sheets made using the forming apparatus are aluminosilicate glass sheets, borosilicate glass sheets or boro-alumino silicate glass sheets.

- The present invention is particularly useful for forming high strain point glass substrates like the ones used in flat panel displays. Moreover, the present invention could aid in the manufacturing of other types of glass sheets.

Although one embodiment of the present invention has been illustrated in the accompanying Drawings and described in the foregoing Detailed Description, it should be understood that the invention is not limited to the embodiment disclosed.

**Claims**

**1.**  A method for producing a glass substrate (105), said method comprising the steps of:

melting batch materials to form molten glass (126);
delivering the molten glass to a forming apparatus (135) that has a body (210) with an inlet (136) that receives the molten glass which flows into a trough (137) formed in the body and then overflows two top surfaces (212', 212") of the trough and runs down two sides (138', 138") of the body before fusing together where the two sides come together to form a glass sheet (216), and drawing the glass sheet using a pull roll assembly (140) to produce the glass substrate, **characterized in that** delivery of the molten glass is managed so as to ensure that more than 7.98 kg/hour (17.6 lbs/hour) of molten glass flows over the first and last 10.16 cm (4 inches) of the two top surfaces (212', 212") at both end sections (220, 222) of the trough (137) and that more than 26.13 kg/hour (57.6 lbs/hour) of molten glass flows over the first and last 22.86 cm (9 inches) of the two top surfaces (212', 212") at both end sections(220, 222) of the trough (137).

2. A method according to claim 1, wherein delivery of the molten glass is managed so as to ensure that more than 9.07 kg/hour (20.0 lbs/hour) of molten glass flows over the first and last 10.16 cm (4 inches) of the two top surfaces at both end sections of the trough in the forming apparatus and more than 29.48 kg/hour (65.0 lbs/hour) of molten glass flows over the first and last 22.86 cm (9 inches) of the two top surfaces at both end sections of the trough.

3. A method according to claim 1 or 2 wherein the trough (137) has a height that varies between the two top surfaces (212', 212") and a bottom surface (206) in a predetermined manner as the bottom surface extends away from the inlet (136)

4. A method according to any of claims 1 to 3, wherein the trough has an embedded object (207) formed on a bottom surface (206) therein where the embedded object is located near an end (208)of the trough which is opposite the inlet to the trough.

5. A method according to any of claims 1 to 4, wherein the trough is sized such that the molten glass has a flow rate in accordance with:

$$Q = \frac{\rho\, g \tan\phi}{3\mu} w^4 \alpha^3 \left[ 1 - \frac{3}{8} \sum_{n=0}^{\infty} \frac{\alpha}{\beta_n^5} \tanh(\beta_n / \alpha) \right]$$

where

Q = the flow rate at any cross section of the trough,
w = the channel width of the trough,
$\alpha$ = the aspect ratio or height over width of the trough,
$\beta_n$ = a variable given by $(2n + 1) /\pi/4$,
$\rho$ = density of the molten glass,
$\mu$ = viscosity of the molten glass,
$\phi$ = angle between a horizontal plane and parallel upper surfaces on the trough,
g = 980 cm/sec$^2$.

**Patentansprüche**

1. Verfahren zur Herstellung eines Glassubstrats (105) wobei das Verfahren folgende Schritte umfasst:

Schmelzen von Chargenmaterialien, um geschmolzenes Glas (126) zu bilden,
Abgeben des geschmolzenen Glases an eine Formgebungsvorrichtung (135), die einen Körper (210) mit einem Einlass (136) aufweist, der das geschmolzene Glas aufnimmt, das in eine Wanne (137) fließt, die im Körper gebildet ist, und dann über die zwei Oberkanten (212', 212") der Wanne fließt und an den Seiten (138', 138") des Körpers herabläuft, bevor es dort zusammenfließt, wobei sich die beiden Seiten treffen, um eine Glasbahn (216) zu bilden, und Ziehen der Glasbahn mit Hilfe einer Zugwalzenanordnung (140), um das Glassubstrat zu produzieren, **dadurch gekennzeichnet, dass** die Abgabe des geschmolzenen Glases derart gelenkt wird, dass sichergestellt wird, dass mehr als 7,98 kg/Stunde (17,6 Pfd./Stunde) geschmolzenen Glases über die ersten und die letzten 10,16 cm (4 Inch) der zwei Oberkanten (212', 212") an beiden Endabschnitten (220, 222) der Wanne (137) fließen und dass mehr als 26,13 kg/Stunde (57,6 Pfd./Stunde) geschmolzenen Glases über die ersten und die letzten 22,86 cm (9 Inch) der zwei Oberkanten (212', 212") an beiden Endabschnitten (220, 222) der Wanne (137) fließen.

2. Verfahren nach Anspruch 1, wobei die Abgabe des geschmolzenen Glases derart gelenkt wird, dass sichergestellt wird, dass mehr als 9,07 kg/Stunde (20,0 Pfd./Stunde) geschmolzenen Glases über die ersten und die letzten 10,16 cm (4 Inch) der zwei Oberkanten an beiden Endabschnitten der Wanne in der Formgebungsvorrichtung fließen und dass mehr als 29,48 kg/Stunde (65,0 Pfd./Stunde) geschmolzenen Glases über die ersten und die letzten 22,86 cm (9 Inch) der zwei Oberkanten an beiden Endabschnitten der Wanne fließen.

**3.** Verfahren nach Anspruch 1 oder 2, wobei die Wanne (137) eine Höhe aufweist, die sich zwischen den zwei Oberkanten (212', 212") und einer Bodenfläche (206) über den Verlauf der Bodenfläche vom Einlass (136) aus in einer im Voraus bestimmten Weise ändert.

**4.** Verfahren nach einem der Ansprüche 1 bis 3, wobei die Wanne (137) einen eingebetteten Gegenstand (207) aufweist, der darin auf einer Bodenfläche (206) gebildet ist, wobei der eingebettete Gegenstand nahe einem Ende (208) der Wanne angeordnet ist, das dem Einlass der Wanne gegenüberliegt.

**5.** Verfahren nach einem der Ansprüche 1 bis 4, wobei die Wanne derart bemessen ist, dass das geschmolzene Glas eine Fließgeschwindigkeit in Übereinstimmung mit Folgendem aufweist:

$$Q = \frac{\rho g \tan\phi}{3\mu} w^4 \alpha^3 \left[ 1 - \frac{3}{8} \sum_{n=0}^{\infty} \frac{\alpha}{\beta_n^5} \tanh\left(\beta_n/\alpha\right) \right]$$

wobei Q der Durchsatz an einem beliebigen Querschnitt der Wanne ist,
w die Kanalbreite der Wanne ist,
$\alpha$ das Seitenverhältnis oder das Verhältnis Höhe zu Breite der Wanne ist ,
$\beta_n$ eine Variable ist, die durch $(2n+1)/\pi/4$ gegeben ist,
$\rho$ die Dichte des geschmolzenen Glases ist,
$\mu$ die Viskosität des geschmolzenen Glases ist
$\Phi$ der Winkel zwischen einer horizontalen Ebene und den parallelen Oberkanten der Wanne ist und
g 980 cm/s$^2$ ist.

## Revendications

**1.** Procédé de production d'un substrat de verre (105), ledit procédé comprenant les étapes de :

fusion de matériaux en vrac afin de former du verre fondu (126) ;
amenée du verre fondu jusqu'à un appareil de formage (135) constitué d'un corps (210) qui présente une admission (136) recevant le verre fondu qui s'écoule dans une goulotte (137) formée dans le corps puis déborde de deux surfaces supérieures (212', 212") de la goulotte et se déverse le long de deux côtés (138', 138") du corps avant de fusionner là où les deux côtés se rejoignent pour former une feuille de verre (216), et étirage de la feuille de verre au moyen d'un ensemble de rouleau de traction (140) afin de produire le substrat de verre, **caractérisé en ce que** l'amenée du verre fondu est gérée de façon à garantir que plus de 7,98 kg/heure (17,6 livres/heure) de verre fondu s'écoule sur les premiers et derniers 10,16 cm (4 pouces) des deux surfaces supérieures (212', 212") au niveau des deux sections d'extrémité (220, 222) de la goulotte (137) et que plus de 26,13 kg/heure (57,6 livres/heure) de verre fondu s'écoule sur les premiers et derniers 22,86 cm (9 pouces) des deux surfaces supérieures (212', 212") au niveau des deux sections d'extrémité (220, 222) de la goulotte (137).

**2.** Procédé selon la revendication 1, dans lequel l'amenée du verre fondu est gérée de façon à garantir que plus de 9,07 kg/heure (20,0 livres/heure) de verre fondu s'écoule sur les premiers et derniers 10,16 cm (4 pouces) des deux surfaces supérieures au niveau des deux sections d'extrémité de la goulotte dans l'appareil de formage et que plus de 29,48 kg/heure (65,0 livres/heure) de verre fondu s'écoule sur les premiers et derniers 22,86 cm (9 pouces) des deux surfaces supérieures au niveau des deux sections d'extrémité de la goulotte.

**3.** Procédé selon la revendication 1 ou 2, dans lequel la goulotte (137) a une hauteur qui varie entre les deux surfaces supérieures (212', 212") et une surface inférieure (206) d'une manière prédéterminée au fur et à mesure que la surface inférieure s'éloigne de l'admission (136).

**4.** Procédé selon l'une quelconque des revendications 1 à 3, dans lequel la goulotte comporte un objet noyé (207) formé sur une surface inférieure (206), l'objet noyé étant situé près d'une extrémité (208) de la goulotte qui est opposée à l'admission de la goulotte.

**5.** Procédé selon l'une quelconque des revendications 1 à 4, dans lequel la goulotte est dimensionnée de telle sorte que le verre fondu ait un débit d'écoulement selon la formule :

$$Q = \frac{\rho\, g \tan\phi}{3\mu}\, w^4 \alpha^3 \left[ 1 - \frac{3}{8} \sum_{n=0}^{\infty} \frac{\alpha}{\beta_n^5}\, \tanh(\beta_n/\alpha) \right]$$

où Q = débit d'écoulement à n'importe quelle coupe transversale de la goulotte,

w = largeur de canal de la goulotte,

$\alpha$ = rapport d'aspect ou hauteur/largeur de la goulotte,

$\beta_n$ = variable donnée par $(2n + 1)/\pi / 4$,

$\rho$ = densité du verre fondu,

$\mu$ = viscosité du verre fondu,

$\Phi$ = angle entre un plan horizontal et des surfaces supérieures parallèles sur la goulotte, g = 980 cm/sec$^2$.

FIG. 1

FIG. 2A

FIG. 2B

MELT BATCH MATERIALS TO FORM MOLTEN GLASS — 302

MANAGE MASS FLOW RATE OF MOLTEN GLASS DELIVERED
TO A FORMING APPARATUS TO FORM A GLASS SHEET

- ENSURE $\geq$ 20 LBS/HR OF MOLTEN GLASS FLOWS
  OVER FIRST/LAST 4" OF FORMING APPARATUS

- ENSURE $\geq$ 65.0 LBS/HR OF MOLTEN GLASS FLOWS
  OVER FIRST/LAST 9" OF FORMING APPARATUS

— 304

DRAW GLASS SHEET TO FORM GLASS SUBSTRATE — 306

FIG. 3

FIG. 4

Legend:
▨ Mass in first 4 inches
▩ Mass in first 9 inches

FIG. 5

**EP 1 756 017 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3338696 A
- US 2001039814 A
- US 2003029199 A
- US 3682609 A
- US 20050268658 A